# EUROPEAN PATENT APPLICATION

(11) **EP 4 814 292 A1**
(43) Date of publication of application: **30.09.2026**
(21) Application number: 25382292.8
(22) Date of filing: 27.03.2025
(51) Int. Cl.: F03D 1/06, F03D 80/30

(54) **SPAR CAP ASSEMBLY FOR A ROTOR BLADE OF A WIND TURBINE**

(71) Applicant: Siemens Gamesa Renewable Energy Innovation & Technology S.L., 31621 Sarriguren (Navarra) (ES)
(72) Inventor: Martins Martinho, João, 6200-811 Vales do Rio (PT); March Nomen, Victor, 08195 Sant Cugat del Valles (ES); Goetting, Olaf Lennard, 9000 Aalborg (DK)
(74) Representative: SGRE-Association

(57) **Abstract**

A spar cap assembly for a rotor blade of a wind turbine is provided. The spar cap assembly (100) comprises a stack (50) of layers (51, 52, ...) of carbon fiber composite material, wherein the layers are stacked in a thickness direction (111) and wherein the stack (50) extends in a longitudinal direction (110), and further comprises a lightning conductor (40) of a lightning protection system extending along the stack of layers. At least one potential equalization assembly (120) configured to electrically connect the stack (50) of layers of carbon fiber composite material to the lightning conductor (40) provides an equipotential bonding (121) at an equipotential bonding position (122) in the longitudinal direction. Two or more longitudinal contact ranges are arranged in longitudinal direction (110) next to each other, wherein each longitudinal contact range (10, 20, ...) comprises at least a first sheet (11, 21, ...) of conductive material that is arranged on and in direct electrical contact with a layer (51, 52, ... ) of the stack (50) and that rests against the lightning conductor (40).

## Description

### FIELD OF THE INVENTION

The present invention relates to a spar cap assembly for a rotor blade of a wind turbine. It further relates to a method of manufacturing a spar cap assembly of such rotor blade.

### BACKGROUND

Wind turbines are often the highest point in an area and thus are often hit by lightning strikes. Rotor blades of a wind turbine are particularly susceptible to lightning strikes, since they take on the highest position during rotation. Lightning protecting systems are installed on the rotor blades of wind turbines to prevent damage caused by lightning strikes.

Modern rotor blades employ carbon fiber reinforced structures to meet structural requirements. To avoid arcing between such conductive carbon structure and a conductor of the lightning protection system (LPS), equipotential bonding is generally required.

The document EP 3 943 745 A1 for example describes a respective lightning protection system for a rotor blade that includes pultruded carbon fiber elements. At positions of a chamfered end of the layers of the spar cap, electrical connections are provided between each end of each layer and the lightning conductor. Such way of contacting the carbon fiber structure may provide an improved potential equalization.

It is desirable to further improve such existing methods of providing equipotential bondings. It is in particular desirable to avoid structural drawbacks while at the same time improving the current carrying capacity of such bonding. Equipotential bondings may conventionally only carry the relatively small currents required for providing potential equalization, but may not be suitable for carrying larger lightning currents, for example when lightning strikes an inboard lightning receptor.

### SUMMARY

According, there is a need to mitigate at least some of the drawbacks mentioned above and to improve the lightning protection for wind turbine rotor blades.

This need is met by the features of the independent claims. The dependent claims describe embodiments of the invention.

According to an aspect of the present invention, a spar cap assembly for a rotor blade of a wind turbine is provided. The spar cap assembly comprises a stack of layers of carbon fiber composite material, wherein the layers are stacked in a thickness direction and wherein the stack extends in a longitudinal direction (which may for example be perpendicular to the thickness direction). A lightning conductor of a lightning protection system extends along the stack of layers. At least one potential equalization assembly configured to electrically connect the stack of layers of carbon fiber composite material to the lightning conductor is comprised in the spar cap assembly. The potential equalization assembly provides an equipotential bonding at an equipotential bonding position in the longitudinal direction. The at least one potential equalization assembly comprises two or more longitudinal contact ranges arranged in longitudinal direction next to each other. Each longitudinal contact range is associated with at least one layer of the stack that is different from the layers of the stack associated with the one or more other longitudinal contact ranges. Each longitudinal contact range comprises at least a first sheet of conductive material that is arranged on and in direct electrical contact with a layer of the stack associated with the respective longitudinal contact range. The first sheet further rests against the lightning conductor and is in direct electrical contact with the lightning conductor. The first sheet does not overlap in thickness direction with each first sheet provided in each other longitudinal contact range.

The potential equalization assembly thus includes at least two respective first sheets which do not overlap in thickness direction and each of which is in direct electrical contact with both, the respective associated layer and the lightning conductor. Accordingly, a good electrical connection may be achieved between the respective layer of carbon fiber composite material and the lightning conductor. As there is direct electrical contact, such electrical connection may also carry larger currents. Further, this arrangement allows the bonding of each layer of the stack to the lightning conductor by such direct electrical connection. Thus, overall, the potential equalization assembly may provide an equipotential bonding that is capable of carrying relatively large currents. By distributing the contacting of the lightning conductor over the consecutive longitudinal contact ranges, the contact area between the lightning conductor and the sheets may further be increased, which likewise increases the current carrying capability. Further, since each sheet may contact and be associated with a different layer, each layer may be contacted efficiently, and currents may be exchanged between each layer and the lightning conductor. Even further, as there is no overlap between the first sheets of each of the longitudinal contact ranges, the increase in thickness caused by the sheets at the potential equalization assembly is limited. Wrinkling and a disturbance of the structure may thereby be avoided. The structural properties and in particular the structural strength may thereby be increased compared to conventional solutions. Even further, since each layer may be connected via a respective sheet, it may not affect the current exchange between the spar cap at the respective potential equalization position and the lightning conductor if additional layers, such as nonconducting layers, are provided between the layers of carbon fiber composite material of the stack.

By providing a better and more robust electrical connection between the lightning conductor and the layers of the stack, the electric energy and peak current values allowed to be transmitted at the respective equipotential bonding position may be increased significantly, compared to previous solutions. A more reliable lightning protection may thereby be achieved. The disclosed solution may in particular increase the number of individual direct connections and the total connection area between the lightning conductor and the layers of the stack for transferring energy. The solution may thus provide potential equalization even in case that lightning strikes the rotor blade at mid span, at which the potential equalization assembly may be provided, since the respectively high currents that need to be exchanged between the lightning conductor and the spar cap may be carried by the assembly.

A longitudinal contact range may be the longitudinal range within which the electrical contact takes place to the associated layer or layers. Different longitudinal contact ranges may not overlap in longitudinal direction. The sheet may not extend in a longitudinal direction beyond its respective longitudinal contact range. Accordingly, the first sheet of each longitudinal contact range may not overlap in thickness direction with any of the other sheets of all other longitudinal contact ranges. The first sheet of each longitudinal contact range may be offset in longitudinal direction from the first sheet of each other longitudinal range. The longitudinal direction may also be referred to as the spanwise direction (from blade root to blade tip).

The lightning conductor may form part of a down conductor of the lightning protection system. The lightning protection system may be part of the spar cap assembly. It should be clear that the down conductor may have several sections, and that the lightning conductor may be a respective section.

The potential equalization assembly may be configured to provide an (single) equipotential bonding between the stack of layers and the lightning conductor at the equipotential bonding position. In other words, all sheets of the potential equalization assembly may form part of the same equipotential bonding. It should further be clear that several equipotential bondings may be provided at different equipotential bonding positions that are spaced apart in the longitudinal direction along the stack. Each equipotential bonding may be formed by a respective potential equalization assembly.

A sheet may be arranged on a layer by arranging it in thickness direction above or below the respective layer. It may be in direct physical contact with the respective layer. The thickness direction may be from the outermost layer (the layer closest to an outer surface of the rotor blade when assembled to a blade) to the innermost layer, or may be defined with respect to a mold from a bottom upwards when the layers are stacked in the mold.

The potential equalization assembly has an extension in longitudinal direction. The equipotential bonding position may for example be defined by the geometrical center in longitudinal direction of the potential equalization assembly (between the two most distant points of the assembly in longitudinal direction), or may be defined as a point of the assembly closest to the root end of the stack. The longitudinal extension of the potential equalization assembly is small compared to the longitudinal extension of the stack (e.g. less than 10%, 5%, 2.5%, or 1%).

Preferably, in each longitudinal contact range, at most two sheets of conductive material are provided for contacting respective layers of the stack. By providing only one or two sheets at each longitudinal contact range, the disturbance of the structure of the spar cap assembly by the potential equalization assembly is limited. A sheet arranged for contacting an associated layer can be sectioned, such sections are however still considered to form part of the same sheet.

For example, each sheet may be located in the stack between two layers of carbon fiber composite material, wherein such position of a sheet in the stack (in thickness direction) may be designated as interlayer position. In each longitudinal contact range of an equipotential bonding assembly, a sheet may only be present at three or fewer (preferably two or fewer) inter layer positions, which differ from the interlayer positions at which a sheet is present in the other longitudinal contact range or ranges. Sheet(s) in one contact range may thus be staggered with respect to the sheet(s) in other contact range(s).

According to an embodiment, the first sheet of a longitudinal contact range is spaced apart in longitudinal direction from the first sheet of each neighboring longitudinal contact range by a spacing distance. The spacing distance may be smaller than a width in longitudinal direction of the first sheet of the longitudinal contact range, it may for example be smaller than 50%, 25%, 10%, or 5% of the width. By providing a respectively small gap, the space requirement in longitudinal direction of the potential equalization assembly may be limited, and contact between sheets of different contact ranges may be avoided. Further, it may be ensured that there is no overlap in thickness direction between sheets of neighboring contact ranges.

Sheets of different longitudinal contact ranges may not contact the same layer of the stack on the same side of this layer. Unnecessary additional sheets may thereby be avoided.

Each layer may be contacted by a dedicated (single) sheet of the potential equalization assembly.

The at least one potential equalization assembly may comprise three, four, or more longitudinal contact ranges. Stacks having a larger number of layers may thus be contacted. There may be no overlap in thickness direction between the first sheets of the plural longitudinal contact ranges.

In an embodiment, the at least one potential equalization assembly comprises, in at least one of the longitudinal contact ranges (e.g., in at least two, three, or more) a second sheet of conductive material. The second sheet of conductive material may be arranged on and in direct electrical contact with a further different layer of the stack that is associated with the longitudinal contact range. The second sheet may be arranged at a position in longitudinal direction such that the second sheet and the first sheet at least partially overlap in thickness direction in the longitudinal contact range. For example, the overlap may be more than 70% of the area of the first sheet projected in thickness direction. Such configuration may reduce the extension in longitudinal direction of the potential equalization assembly significantly while maintaining the high current carrying capability for the potential equalization of each layer of a stack.

The overlap between the first and second layers of the same longitudinal contact range may be more than 70%, 80%, or 90% of the area of the first sheet projected in thickness direction. The first and the second layer may fully overlap. It should be clear that they may be slightly misaligned or may have a slight difference in size, for example in view of manufacturing tolerances and tolerances during the assembly of the spar cap assembly.

Each longitudinal contact range, or each longitudinal contact range except one longitudinal contact range, may comprise a respective second sheet of conductive material. For example, the layers of the stack may alternatingly be contacted by a first sheet and a second sheet, although other arrangements are conceivable.

The second sheet of the longitudinal contact range may not overlap in thickness direction with any sheet of each of the other longitudinal contact ranges of the potential equalization assembly. Accordingly, the overlap in thickness direction may be limited to the two sheets of the same longitudinal contact range. A disturbance of the structure may thus be minimized.

The second sheet of each longitudinal contact range may rest against the lightning conductor and may be in direct electrical contact with the lightning conductor. For example, for the or for each longitudinal contact range having a second sheet, the first sheet may rest against the lightning conductor from a first side and the second sheet may rest against the lightning conductor from a second side different from the first side. Both, the first and the second sheet, are thus each in direct electrical contact with the lightning conductor. The first side may for example lie opposite to the second side. If, in thickness direction, the second sheet is arranged above the first sheet, the second sheet may for example contact the lightning conductor from above whereas the first sheet may contact the lightning conductor from below.

It is preferred that each sheet of the potential equalization assembly is in direct physical and electrical contact with the lightning conductor.

In an embodiment, each longitudinal contact range or each longitudinal contact range except one, may be associated with exactly two different layers of the stack. These layers may be contacted by the first sheet and the second sheet provided in the respective longitudinal contact range.

Two adjacent (or neighboring) layers of the stack may be associated with the same longitudinal contact range, and the first sheet may be in direct electrical contact with the first of the two layers and the second sheet may be in direct electrical contact with a second of the two layers. A simple structure may thereby be achieved. The first and/or the second sheet of one or more longitudinal contact ranges may each be arranged between two layers of the stack. Such sheet may be provided for contacting one layer of the stack, but may at the same time be in physical and even electrical contact with the other layer of the two layers between which it is arranged. However, this is not necessary, since each layer may be contacted by a dedicated sheet.

The one or two sheets of each longitudinal contact range may thus be in physical contact with at most four carbon fiber composite material layers of the stack, or at most three carbon fiber composite material layers of the stack if the sheets are provided between neighboring layers. Each sheet may be in physical contact with only one carbon fiber composite material layer of the stack if intermediate layers are provided in the stack. In each longitudinal contact range, a dedicated electrical connection may only be provided for one or two carbon fiber composite material layers of the stack, each by a respective sheet.

In some implementations, the stack may comprise, between two adjacent layers of carbon fiber composite material, an intermediate layer. The first and/or optionally the second sheet of one or more longitudinal contact ranges may be arranged between the layer which it electrically contacts and the intermediate layer. The sheet may thus electrically contact its associated layer, but may be separated from the next layer in the stack, which may itself be contacted by its own associated sheet.

Such intermediate layer may extend across the whole interface between the two layers of carbon fiber composite material, or may extend for only a part of the interface. The intermediate layer may for example be a glass fiber or carbon fiber composite material layer, or a hybrid material layer. For example, it may be introduced into the stack during the lay-up of the stack, by placing a respective fabric in the stack.

In an embodiment, at the equipotential bonding position, the assembly comprises at least one sheet for each layer of a group of layers of the stack, the sheet being in direct electrical contact with the respective layer. The stack may for example comprise N layers, and the group of layers may comprise N, N-1, or N-2 layers. For example, some of the innermost layers (as seen from the outer surface of the blade shell) may not need to be contacted. Preferably, the group comprises all layers, so that all layers are contacted by a dedicated sheet. The number of sheets may correspond to the number of layers.

The number of longitudinal contact regions may correspond to half the number of layers (for an even number of layers, which may be rounded up for an odd number of layers). In the latter case, one of the contact ranges will comprise only one sheet.

It is particular advantageous if in the longitudinal contact range, the at least one layer associated with the longitudinal contact range comprises an electrically activated region. The sheet may be in direct electrical contact with the electrically activated region of the layer. The region may be electrically activated by exposing carbon fibers of the layer in the region. For example, the region may be grinded, sanded, etched, or the like to expose carbon fibers. The electrical contact resistance may thus be reduced significantly. As in thickness direction, the layer may be contacted from above or from below by the sheet, the electrically activated region may be on the upper or lower side of the layer. As the (each) layer may be contacted by one dedicated sheet, it may only have one electrically activated region for the respective potential equalization assembly. Both, the first sheet and the second sheet, may contact their respective layer at a respective electrically activated region thereof.

The electrically activated region may extend in a longitudinal direction or a distance that is larger than a width of the sheet in the longitudinal direction. Improved electrical contact may thus be established over the whole width of the sheet.

The first and/or the second sheet of each longitudinal contact range may extend from at least one lateral side of the stack to the lightning conductor to contact the lightning conductor. A lateral side may be a side in lateral direction. The lateral direction may be perpendicular to the longitudinal direction and to the thickness direction.

In some embodiments, the spar cap assembly may comprise a second lightning conductor extending along the stack on a lateral side of the stack opposite to a lateral side on which the lightning conductor extends. The first and/or the second optional sheet of each longitudinal contact range may extend from both sides of the stack to the lightning conductor and to the second lightning conductor to contact each of both lightning conductors. The respective sheet may thus also rest against the second lightning conductor and be in direct electrical contact with the second lightning conductor. Current carrying capacity of the potential equalization assembly may thus further be increased.

The stack may have a mid-span region in longitudinal direction of the stack. The mid-span region may correspond to a mid-span region of the rotor blade when assembled to the rotor blade. The mid-span region of the rotor blade may for example comprise at least a range of 40%L to 60%L, or 35%L to 70%L, as measured from the blade root, wherein L is the length of the rotor blade.

In the mid-span region of the stack, a number of layers of the stack may be constant and/or no chamfered ends of the layers of the stack may be present.

The spar cap assembly may comprise one, two, or more potential equalization assemblies in the mid-span region, each being located at a different equipotential bonding position. At or close to air terminations that may be provided in the mid-span region of the rotor blade, an electrical connection of high current carrying capacity may thus be provided between the stack and the lightning conductor which may avoid undesired arcing between the air termination and the carbon fiber spar cap.

The spar cap assembly may for example comprise an electrical connection to an air termination system, for example to a lightning receptor, within the mid-span region of the stack.

In an exemplary implementation, a potential equalization assembly may be provided adjacent to one or more, e.g. each, electrical connection to an air termination. The potential equalization assembly may for example be arranged within a longitudinal range about the electrical connection to the air termination system, wherein the longitudinal range may be smaller than 10%, 5%, or 2.5% of the longitudinal extension of the stack. The size of the longitudinal range may be between 0.5% and 2.5% of the longitudinal extension of the stack.

The electrical connection towards the air termination, in particular the lightning receptor, may provide a connection to the lightning conductor, e.g. may be configured to connect the lightning receptor to the lightning conductor. The air termination may protect the carbon fiber spar cap from direct lightning strike. By the potential equalization assembly, owned to the improved current carrying capacity, a large amount of the lightning current can be transferred from the lightning conductor to the stack, thereby improving potential equalization between the lighting conductor and the stack.

The stack may extend in longitudinal direction between a first end and a second end. The spar cap assembly may have an inner region at the first end in which the number of layers changes and an outer region at the second end in which the number of layers changes. The mid-span region may be arranged between the inner region and the outer region. The spar cap may thus be tapered towards each end, as the number of layers reduces towards each end.

The longitudinal end of each layer may be chamfered. The disturbance of the structure may thereby be reduced.

The at least one potential equalization assembly may, in longitudinal direction, be spaced apart from the longitudinal region in which the longitudinal end of any layer of the stack is chamfered. The spar cap assembly may include additional equipotential bonding elements in the regions of the chamfered ends, these may however be configured differently, as good electrical contact can be established to the chamfered ends, as the carbon fibers may be exposed at these ends.

The layers of carbon fiber composite material may be layers of pultruded elements, in particular pultruded semi-finished products. The layers may be layers of carbon fiber composite material planks, or layers of prepreg material. The layers may be pre-cured, or may be fully cured. Preferably, layers of fully cured pultruded elements (e.g. planks) are employed, as these facilitate manufacturing and provide high structural strength.

In an example, a layer (preferably each layer) of the stack associated with a longitudinal contact region may comprise at least two pultruded elements extending in longitudinal direction and being arranged next to each other in lateral direction of the stack. The sheet of the longitudinal contact range that is in direct electrical contact with the layer may extend over the at least two pultruded elements and may be in direct electrical contact with each of the at least pultruded elements. Plural elements of the same layer may thus be contacted by the same sheet. Planks of carbon fiber material may accordingly be arranged next to each other in lateral direction in order to form the stack.

The sheet may for example extend over the full width of at least one pultruded element and may at least partly extend over the width of a second pultruded element arranged next to the first mentioned pultruded element (for example over more than 50% or 70% of the width of the pultruded element in lateral direction). In other implementations, it may extend fully over both pultruded elements, for example if further pultruded elements are arranged in the same layer, or if lightning conductors are arranged on both sides of the stack.

The layers of the stack, the lightning conductor, and the at least one potential equalization assembly may be embedded in a common matrix material. Accordingly, the spar cap assembly may constitute a precast component that may be used for manufacturing a rotor blade. It may for example be embedded in a shell of such rotor blade. In other configurations, the spar cap assembly may be formed together with the shell, e.g. in a common vacuum infusion process.

Each sheet may have a width in a direction parallel to the longitudinal direction, wherein the width may lie within a range of 0.1 m to 1 m, preferably in the range of 0.2 m to 0.5. m. A compact potential equalization assembly may thus be achieved.

Each sheet may comprise or consist of at least one material selected from the group consisting of: a carbon fiber fabric; a bi-axial carbon fiber fabric (bi-axial weaving; biax); a unidirectional carbon fiber fabric (which may comprise carbon fibers running in the same direction); a conductive foil; a metal foil; a conductive mesh; or a metal mesh. Although these may combined in a sheet, it is preferred that a sheet comprises only one of the materials.

A sheet may comprise a single layer of the respective material, or may comprise plural layers of the respective material, such as plural layers of carbon fiber fabric. However, a single layer is preferred. Examples of the metal are copper, or other metals having a high current carrying capacity.

According to a further aspect of the invention, a rotor blade comprising a spar cap assembly having any of the configurations described herein is provided. The stack of the spar cap assembly may provide structural strengthening of the rotor blade.

In some embodiments, the rotor blade may comprise two respective spar cap assemblies, one on the pressure side and one on the suction side of the rotor blade.

According to a further aspect of the invention, a method of manufacturing a spar cap assembly of a rotor blade of a wind turbine is provided. The method comprises arranging layers of carbon fiber composite material in a stack, wherein the layers are stacked in a thickness direction and wherein the stack extends in a longitudinal direction; providing a lightning conductor of a lightning protection system that extends along the stack; and forming at least one potential equalization assembly to electrically connect the stack of layers of carbon fiber composite material to the lightning conductor to provide an equipotential bonding at an equipotential bonding position in the longitudinal direction. Forming the at least one potential equalization assembly comprises, when forming the stack, arranging in a first longitudinal contact range a sheet of conductive material in direct physical contact with a layer of the stack that is associated with the first longitudinal contact range, wherein the sheet is further arranged to directly rest against the lightning conductor; and when forming the stack, arranging in a second longitudinal contact range a sheet of conductive material in direct physical contact with a different layer of the stack that is associated with the second longitudinal contact range, wherein the sheet is further arranged to directly rest against the lightning conductor. The first longitudinal contact range and the second longitudinal contact range are arranged in longitudinal direction next to each other. The sheet in the second longitudinal contact range is arranged so as to not overlap in thickness direction with the sheet arranged in the first longitudinal contact range.

The direct physical contact may result in direct electrical contact, for example directly when laying the sheet or at least after the assembly is embedded in a common matrix.

The method may further comprise, when forming the stack, arranging in the first longitudinal contact range a second sheet of conductive material in directly physical contact with a different layer of the stack that is associated with the first longitudinal contact range, wherein the second sheet is further arranged to directly rest against the lightning conductor on a side of the lightning conductor different from the side on which the sheet of the first longitudinal contact range rests.

The method may further comprise, when forming the stack, arranging an intermediate layer between two layers of carbon fiber composite material above or below a sheet. The direct physical contact between the sheet and its associated layer may thus be maintained.

The method may for example be performed by laying up the layers and the sheets in a mold for manufacturing the spar cap assembly, e.g. as a precast piece. A pre-fabricated spar cap assembly may be formed that can be integrated into the shell of a rotor blade. In other embodiments, the stacking may occur when laying up the shell, so that the spar cap assembly may be manufactured as part of manufacturing a rotor blade.

For example, a first layer may be laid into the mold; the sheet of the first longitudinal contact range may be arranged on the first layer, e.g. in an electrically activated region thereof; a second layer may be stacked on the first layer; a second sheet of the first longitudinal contact range may be arranged on the second layer, e.g. in an electrically activated region thereof; a third layer may be stacked on the second layer; the sheet of the second longitudinal contact range may be arranged on the third layer, e.g. in an electrically activated region thereof.

For each sheet, an end of the sheet that protrudes from the stack may be placed in direct contact with the lightning conductor.

The method may continue in a corresponding way until all layers of the stack have been stacked and each layer has been contacted by a dedicated sheet of the potential equalization assembly. Plural respective potential equalization assemblies may be formed at different longitudinal positions of the stack.

It should be clear that the providing of two sheets in the same longitudinal contact range is optional. It should further be clear that additional structures may be provided in the stack, such as an intermediate layer which may be placed in the stack after laying up the sheet. Also, it should be clear that the order may be reversed, and that some layers of the stack may not be contacted.

The method may further comprise embedding the stack, the lightning conductor and the at least one potential equalization assembly in a common matrix material. For example, this may be performed by using a vacuum infusion process to infuse a matrix material, such as a polymer resin, and by curing the matrix material after infusion. The external pressure experienced by the stack in the vacuum infusion process may compress the layers of the stack and may result in a firm contact between the sheet and its associated layer, thus establishing a good direct electrical connection which may have increased current carrying capacity.

The method may be performed so as to manufacture the spar cap assembly having any of the configurations described herein. Further. The spar cap assembly disclosed herein may have any configuration resulting from any of the manufacturing methods described herein.

By such rotor blade or method, advantages similar to those outlined further above with respect to the spar cap assembly may be achieved.

It is to be understood that the features mentioned above and those yet to be explained below can be used not only in the respective combinations indicated, but also in other combinations or in isolation, without leaving the scope of the present invention. In particular, the features of the different aspects and examples of the invention can be combined with each other unless noted to the contrary.

### BRIEF DESCRIPTION OF THE DRAWINGS

The foregoing and other features and advantages of the invention will become further apparent from the following detailed description read in conjunction with the accompanying drawings. In the drawings, like reference numerals refer to like elements.
Fig. 1 is a schematic drawing showing a spar cap assembly according to an embodiment.
Fig. 2 is a flow diagram illustrating a method of manufacturing a spar cap assembly according to an embodiment.
Fig. 3 is a schematic drawing showing an exemplary implementation of a potential equalization assembly of the spar cap assembly of figure 1 according to an embodiment.
Fig. 4 is a schematic diagram showing a cross section of a part of the spar cap assembly of figure 1 showing placement of the sheets according to an embodiment.
Figs. 5-16 are schematic diagrams showing a lay-up procedure for manufacturing a spar cap assembly according to an embodiment.
Fig. 17 is a schematic drawing showing an alternative arrangement of a sectioned conductive sheet on a layer of a spar cap assembly according to an embodiment.

### DETAILED DESCRIPTION

In the following, embodiments and/or examples of the invention will be described in detail with reference to the accompanying drawings. It is to be understood that the following description of the embodiments is given only for the purpose of illustration and is not to be taken in a limiting sense. It should be noted that the drawings are to be regarded as being schematic representations only, and elements in the drawings are not necessarily to scale with each other. Rather, the representation of the various elements is chosen such that their function and general purpose become apparent to a person skilled in the art. As used herein, the singular forms "a," "an," and "the" are intended to include the plural forms as well, unless the context clearly indicates otherwise. The terms "comprising," "having," "including," and "containing" are to be construed as open-ended terms (i.e., meaning "including, but not limited to,") unless otherwise noted.

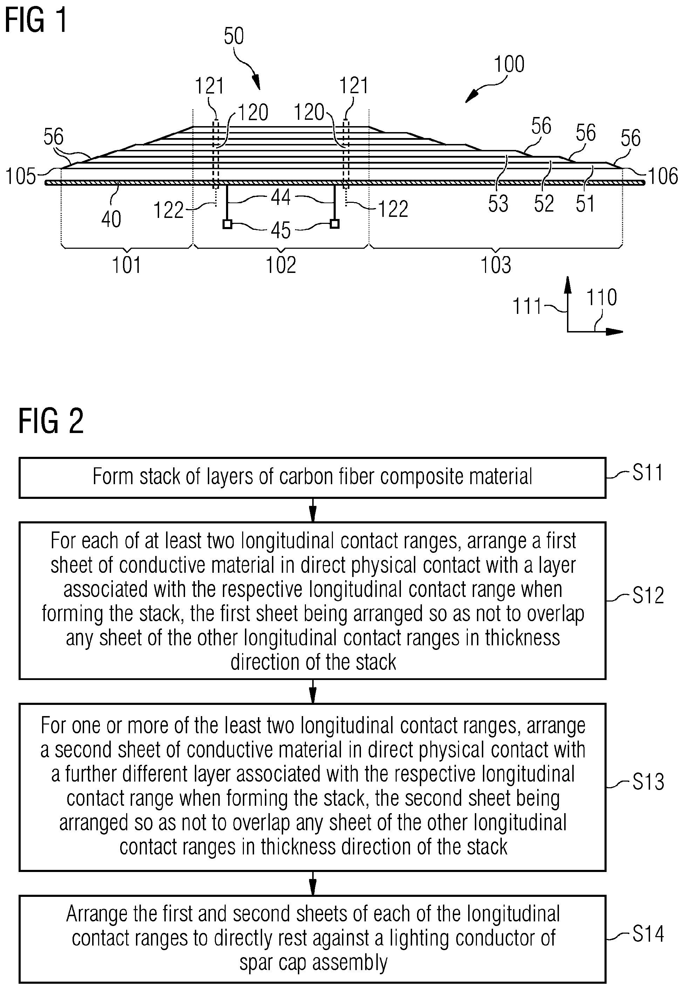

Fig. 1 schematically illustrates a spar cap assembly 100 for a rotor blade of the wind turbine. Spar cap assembly 100 comprises a stack 50 of layers 51, 52, 53, ... of carbon fiber composite material. Stack 50 extends from a root side end 105 (pointing towards a root end of the rotor blade) towards a tip side end 106 (pointing towards the tip of the rotor blade when assembled in the rotor blade). Stack 50 comprises an inner region 101 adjacent to the root side end 105, an outer region 103 adjacent to the tip side end 106, and a mid-span region 102 between the inner region 101 and the outer region 103. The mid-span region 102 may correspond to a mid-span region of the rotor blade when the spar cap assembly 100 is assembled in a rotor blade. The inner region 101 and the outer region 103 may be defined as regions in which the number of layers of the stack 50 changes. The mid-span region 102 may be defined as the region in which the number of layers of the stack remains constant. However, the mid-span region 102 may extend further outwardly towards the tip side end 106, for example to a position corresponding to between 60% and 80% of the length of the rotor blade as measured from the root end of the rotor blade.

The spar cap assembly 100 may comprise a lightning conductor 40, which may form part of a down conductor of a lightning protection system of the rotor blade when assembled in the rotor blade. Such down conductor may for example extend from a lightning receptor at a tip of the rotor blade to the rotor blade root where it is connected to an earth connection to securely transfer lightning currents to ground. Although the lightning conductor 40 is drawn as a continuous conductor that extends from the tip side end 106 to the root side end 105, it may in other configurations be sectioned, the parts of the lightning current may also be conducted via the stack 50. Respective lightning protection systems are generally known, and reference is made for example to the document EP 3 943 745 A1, which is incorporated herein by reference in its entirety.

The layers 51, 52, 53, ... of the stack 50 may comprise chamfered ends 56. A smoother upper surface of the stack 50 may thus be obtained, which may result in a reduced disturbance of the structure and reduced stress concentrations. As the carbon fibers may be exposed at these chamfered ends 56, conventional systems may provide an electrical contact between the layers 51, 52, ... and the lightning conductor 40 via these ends, as described in the above cited document.

It has been found that lightning may directly strike the stack 50 in the mid-span region 102. It is thus desirable to provide air terminations in the mid-span region 102 to protect the carbon fiber spar cap formed by stack 50 from direct lightning strikes. Via an electrical connection 44, a respective lightning receptor 45 may thus be connected to the down conductor 40 in the mid-span region 102. As the energy of the lightning strike to such receptor flows in the lightning conductor 40, voltage differences may be generated between the lightning conductor 40 and the carbon fiber layers 51, 52, ... of the stack 50. The present solution thus provides one, two, or more equipotential bondings 121, which may be arranged in the mid-span region 102 and away from the chamfered ends 56 of the layers 51, 52, .... Equipotential bondings 21 may be provided at one or more longitudinal equipotential bonding positions 122 in the longitudinal direction 110 of the spar cap assembly 100, i.e. of the stack 50. Such equipotential bondings 121 may provide an electrical connection between the layers of the stack 50 and the lightning conductor 40 to provide potential equalization. However, as relatively large currents flow upon a lightning strike to a receptor 45, such bonding 121 may be required to carry a relatively large amount of current that is transferred from the lightning conductor 40 to the stack 50.

The equipotential bonding 121 is thus, according to the present solution, realized by a potential equalization assembly 120, details of which are described further below. It is noted that the layers are stacked on top of each other in a thickness direction 111. The lowest layer 51 may correspond to a layer closest to an outer surface of the shell of the rotor blade when assembled in the rotor blade. When stacking layers 51, 52, ... in a mold to manufacture the spar cap assembly 100 or the rotor blade shell, layer 51 is usually the bottom layer (being the longest layer), the shortest layer being stacked on top.

The potential equalization assembly 120 may provide a dedicated electrical connection from each layer of the stack 50 to the lightning conductor 40. Such electrical connection may be in direct electrical contact with both, the respective layer of a stack 50 and the lightning conductor 40. Thus, an improved electrical connection that is capable of carrying higher currents may be achieved.

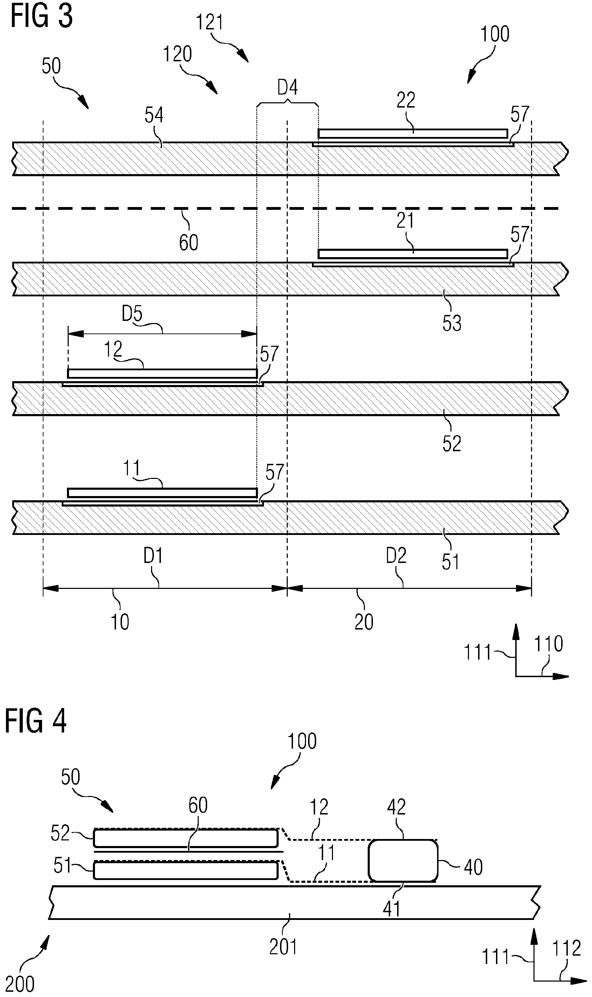

Every layer of the stack 50 may be connected by means of a conductive sheet that is in direct physical contact with the respective layer and that extends to the outside of the stack 50 to the lightning conductor 40. Sheets of subsequent layers or pairs of layers may be staggered in the longitudinal direction so that they can come into direct electrical contact with the lightning conductor 40. Fig. 4 illustrates a sectional view taken perpendicular to the longitudinal direction 110, wherein parts of two layers 51, 52 are exemplarily shown. A first sheet 11 is in direct physical contact with the layer 51 and extends in lateral direction 112 to the lightning conductor 40. A second sheet 12 is in direct physical contact with layer 52 and extends in lateral direction 112 to the lightning conductor 40. Sheets 11, 12 rest against a lower side 41 and the upper side 42 of the lightning conductor 40, respectively. Both sheets 11, 12 are thus in direct physical contact with the lightning conductor 40. A direct electrical connection can thus be established between the sheets 11, 12 and the layers 51, 52 as well as the lightning conductor 40. Although the lightning conductor 40 is contacted from opposite sides, it should be clear that the arrangement may also be different, i.e. the sheets may partially wrap around the lightning conductor 40.

Fig. 4 further schematically illustrates that the stack 50 can be integrated in a rotor blade 200, it may for example be integrated in an outer shell 201 or rest on an outer shell 201, or may rest on an inner shell of the rotor blade 200. The lowest layer 51 may thus be the layer closest to the outer shell 201. A respective spar cap assembly 100 may be integrated in the rotor blade 200 either on the pressure side or on the suction side of the rotor blade, or on both, pressure and suction sides.

Fig. 3 is a sectional side view of the spar cap assembly 100 and schematically illustrates part of a potential equalization assembly 120 of a single equipotential bonding 121 of Fig. 1. The potential equalization assembly 120 comprises plural longitudinal contact ranges 10, 20 in each of which an electrical connection is established between predetermined layers associated with the respective longitudinal contact range and the lightning conductor 40. The longitudinal contact range 10 in longitudinal direction 110 is associated with the layers 51, 52 and an electrical connection is established to these layers within this range, which has a width D1 in longitudinal direction. Longitudinal contact range 10 comprises the first sheet 11 that is in direct physical contact with layer 51 and the second sheet 12 that is in direct physical contact with layer 52. Sheets 11, 12 may have the same width D5 in longitudinal direction 110, but may also have different widths. Preferably, they do not extend beyond the longitudinal range 10, i.e. the width D1.

The layers 51, 52 may comprise an electrically activated region 57 at which the sheets 11, 12 contact the respective layers 51, 52. Such electrically activated region may be formed by exposing the carbon fibers of layers 51, 52 to provide an improved electrical connection. Electrical activation may for example occur by grinding, sanding, etching, or any other method suitable to improve the electrical connection to the carbon fibers.

The sheets 11, 12 extend at least from one lateral side of the stack 50 and into contact with the lightning conductor 40, as illustrated in Fig. 4. Accordingly, each sheet 11, 12 provides a direct electrical connection between the lightning conductor 40 and the respective layer 51, 52.

The longitudinal contact range 20 is arranged next to the longitudinal contact range 10, wherein these ranges do not overlap. It may have a width D2 in longitudinal direction 110, which may be the same as D1 or different. The longitudinal contact range 20 is associated with the layers 53 and 54 of the stack 50. In a similar manner, first and second sheets 21, 22 are provided and are in direct physical contact with the respective layers 53, 54 to provide a direct electrical connection to the lightning conductor 40. Reference is made to the above explanations for the first range 10 to avoid repetition. The width D5 of sheets 21, 22 may be the same as that of sheets 11, 12; however it may also be different. Sheets 21, 22 do not extend in longitudinal direction 110 beyond the longitudinal range 20. Accordingly, sheets 11, 12 do not overlap with sheets 21, 22 in the thickness direction 111. In particular, sheets 11, 12 may be spaced apart in longitudinal direction 110 from the sheets 21, 22 by a spacing distance D4.

As there is no overlap, the sheets 21, 22 can also come into direct physical contact with the lightning conductor 40 and thus establish a direct electrical connection therewith.

The potential equalization assembly 120 comprises further longitudinal contact ranges 10, 20 with respective one or two sheets for contacting the remaining layers of the stack 50, wherein each longitudinal contact region comprises at most two sheets. Each layer of the stack 50 can thus be contacted directly by a respective dedicated sheet, wherein each sheet is in direct physical and electrical contact with the lightning conductor 40. Such configuration may achieve a high current carrying capacity, so that even larger currents that may occur during a lightning strike in the mid-span region may be transferred to the stack 50.

It is optional to provide two sheets 11, 12 in each longitudinal contact range 10, 20, .... For example, when an odd number of layers is present, one of the longitudinal contact ranges will comprise only a single sheet. As another example, some or each longitudinal contact range may comprise only a single sheet. Although the width in longitudinal direction of the potential equalization assembly 120 may thereby increase, the single sheet may for example be wrapped around the lightning conductor 40 to further improve the electrical contact. However, two sheets in each contact range are preferred, if possible.

In the example of Fig. 3, adjacent layers 51, 52 are contacted by the sheets 11, 12 of the same longitudinal contact range 10. It is also conceivable to change the order of the sheets, for example to contact layers 51, 53 in the first range 10 and to contact layers 52, 54 in the second range 20. Any respective contacting order may be chosen. Particular benefits may thereby be achieved during the lay-up procedure of the spar cap assembly, for example by first laying-up all sheets that contact the lightning conductor 40 from the lower side and thereafter laying-up the sheets that contact the lightning conductor 40 from the upper side.

The electrically activated region 57 may extend over the width D1, D2 of the respective contact range 10, 20, it may however extend beyond that or may extend over a smaller distance. Preferably, the width is at least the same width as the width D5 of the sheets, so that good electrical contact is established.

The stack 50 may comprise between some layers or between each pair of layers an intermediate layer 60. Such intermediate layer may be made of a carbon fiber, glass fiber, or other material, for example by placing a respective fabric on the stack during the lay-up procedure. If such intermediate layer 60 is present, it is preferably provided between the respective sheet and the layer on this side of the sheet on which the layer is not electrically activated, as shown for sheet 21 and layer 54 in Fig. 3.

Although considering the thickness direction 111, the sheets contact its respective associated layer of the stack on the upper side, it is also possible to change the arrangement to contact the respective layer from the lower side. Further, when the stack is assembled, the respective sheet may certainly be in direct electrical contact with both of the layers between which it is placed, although preferably, one layer with which the sheet is in contact is electrically activated. This may facilitate manufacturing of the spar cap assembly and may further ensure that one sheet provides a dedicated electrical connection for one specific layer of the stack.

It is noted that although the intermediate layer 60 may be non-conductive, the electrical connection provided by the potential equalization assembly 120 is not disturbed, as each layer has its own dedicated electrical connection. Therefore, it becomes possible to adapt the structure of the stack in accordance with the desired structural properties without the need to provide an electrical connection between different layers of the stack.

The examples of Figs. 1 and 4 illustrate one lightning conductor 40 on one of the lateral sides of the stack 50. However, it is likewise conceivable to provide one lightning conductor 40 on each lateral side of the stack. In this case, the sheets 11, 12, **...** may also extend from the other lateral side of the stack and into direct physical and electrical contact with the second lightning conductor (not shown). The current carrying capacity may thus further be increased.

The sheets 11, 12, 21, 22, ... may be made of a carbon fiber fabric, preferably a bi-axial fabric. They may also be made of a unidirectional carbon fabric. In other embodiments, they may be made of an expanded metal foil, a metal mesh, or the like. Further, in the illustrated examples, the carbon sheet 11, 12 is shown as a single sheet that extends out of the stack in a direction perpendicular to the longitudinal direction 110. It should be clear that each sheet 11, 12 may also be sectioned into several sheet sections, and/or that the sheets may also be placed at an angle and thus leave the stack at its lateral side at an angle. However, also when the sheet is sectioned into multiple sections, it is clear that in each longitudinal contact range 10, 20 the respective sheet or sheet sections only electrically contact the layers associated with the respective longitudinal contact range. One and at most two layers may be associated with each longitudinal contact range. Accordingly, in each longitudinal contact range, at most two layers of the stack may be provided by a dedicated electrical connection.

Each layer 51, 52, ... of the stack 50 may be formed by one, two, or more planks comprising carbon fiber material which may be placed next to each other (in lateral direction 112). Each plank may be a carbon fiber pultruded element, in particular a carbon fiber pultruded semi-finished product. Depending on the desired size of the spar cap and the width of the respective planks or pultruded elements, the number placed in lateral direction next to each other may change. Similarly, the number of layers stacked in thickness direction may change depending on the desired structural properties of the spar cap. Correspondingly, the number of longitudinal contact ranges may be adapted to the number of layers of the stack.

Fig. 2 shows a flow-diagram of a general example of manufacturing a respective spar cap assembly. A stack 50 of layers of carbon fiber composite material is formed in step S1. During the forming of the stack, the sheets are placed in the stack. In step S12, for each of at least two longitudinal contact ranges, a first sheet of conductive material is arranged in direct physical contact with a layer associated with the respective longitudinal contact range when forming the stack. The first sheet is further arranged so as not to overlap any sheet of the other longitudinal contact ranges in the thickness direction of the stack. In step S13, for one or more of the at least two longitudinal contact ranges, a second sheet of conductive material is arranged in direct physical contact with a further different layer associated with the respective longitudinal contact range when forming the stack. The second sheet may be arranged so as not to overlap any sheet of the other longitudinal contact ranges in thickness direction of the stack. Within the same longitudinal contact range, the first and second sheets may certainly overlap in thickness direction.

In step S14, the first sheet and the second sheet (if provided) of each of the longitudinal contact ranges are arranged to directly rest against a lightning conductor of the spar cap assembly. Thus, a direct electrical contact may be established via the sheets between each of the layers of the stack and the lightning conductor.

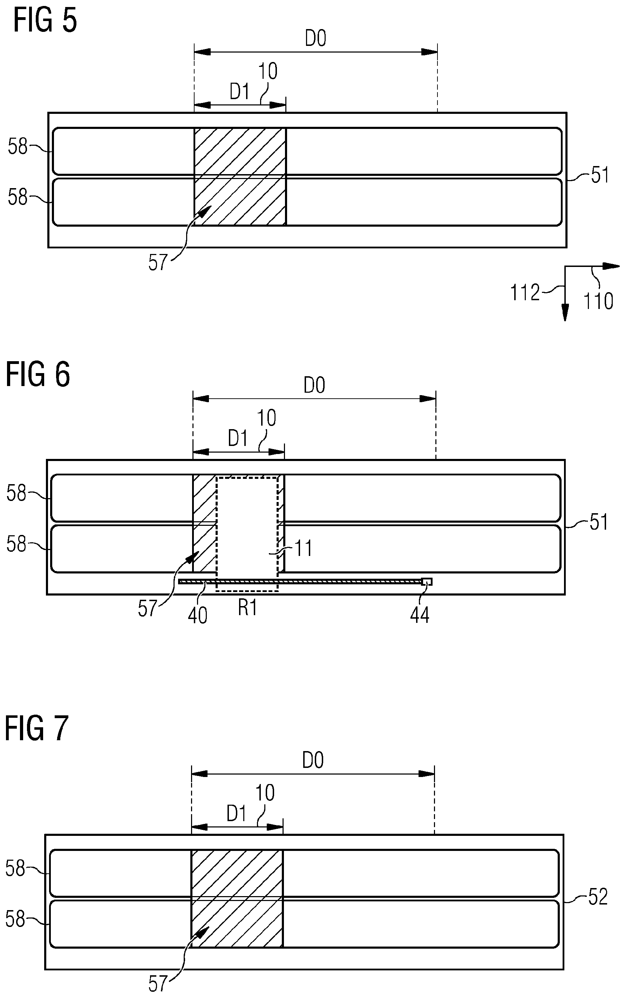

With respect to Figs. 5 to 17, a specific implementation of the method of manufacturing a spar cap assembly according to an embodiment is illustrated. It should be noted that by such method, the above-described spar cap assembly may be obtained, so that the above explanations are equally applicable. The method may be modified so as to obtain any of the above-described configurations; such modifications will readily be apparent to the skilled person from the above description.

The manufacturing may take place in a mold and the components of the spar cap assembly may then be assembled together by using vacuum infusion method to embed them in a common matrix material. The spar cap assembly may thus be manufactured as a precast component after curing of, e.g., a polymer matrix material. Besides the components described in the following, other components, e.g. non-conductive material, may be present in the spar cap assembly, such as glass fiber bi-axial fabric, core material, balsa wood, and the like. However, these are known and not described here.

In Fig. 5, two carbon fiber planks 58 (e.g. pultruded elements) are placed in lateral direction 112 next to each other. The planks are electrically activated in the region 57, e.g. by grinding or sanding, to expose the underlying carbon fibers. This occurs within the longitudinal contact range 10. In Fig. 6, in this longitudinal contact range 10 at a longitudinal position R1, a sheet 11, e.g. carbon fiber bi-axial fabric, is positioned in the electrically activated area 57. Further, the lightning conductor 40 is placed with a certain distance from the carbon planks 58 while maintaining electrical and direct physical contact with the sheet 11 along the sheet's width. The lightning conductor 40 may comprise an interface point, which may provide an electrical connection 44 towards a lightning receptor, or which may be provided to connect to a further section of lightning conductor to form a down conductor.

In Fig. 7, during the lay-up process, a further layer 52 of carbon fiber planks 58 is placed on top of the stack. Similar to layer 51, an electrically activated region 57 is formed on layer 52. It is noted that prior to placing the second layer 52 on the stack, an intermediate layer of conductive carbon fabric or non-conductive glass fabric may be placed on top of the first layer 51. However, this is optional. Using this order, such intermediate layer may not disturb the contact between sheet 11 and layer 51.

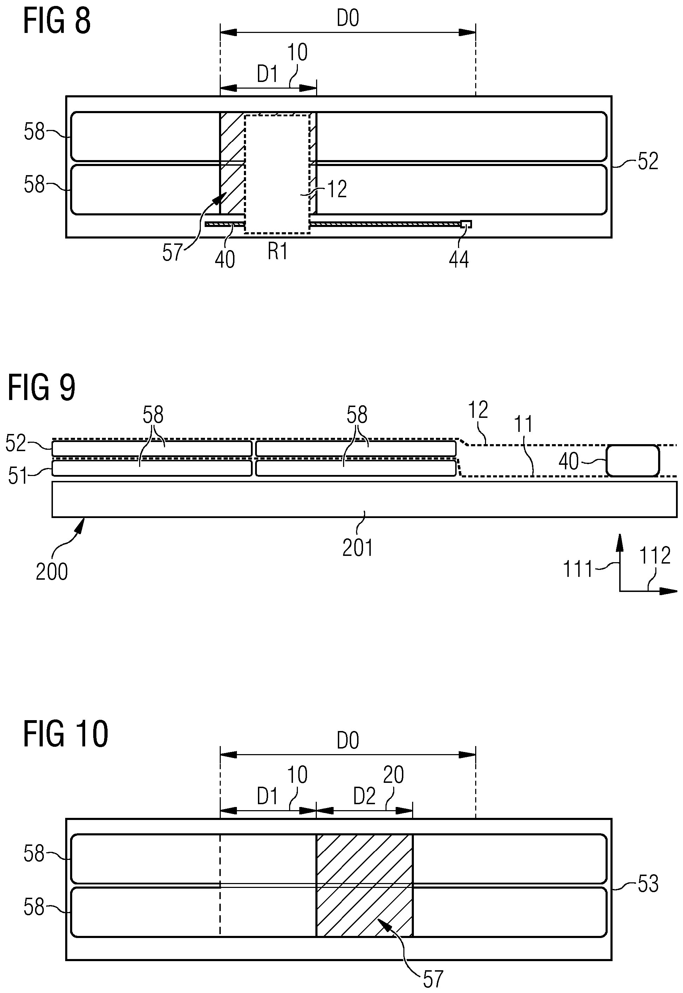

In Fig. 8, a second sheet 12 is placed in the first longitudinal contact range 10 in direct physical contact with the electrically activated region 57 of the second layer 52 and with the lightning conductor 40. As can be seen, the second sheet 12 rests against the lightning conductor 40 on the upper side thereof. Fig. 9 illustrates a cross-sectional view of this situation at the longitudinal position R1. As can be seen in Fig. 9, both sheets 11, 12 are in direct contact with lightning conductor 40. Fig. 9 further schematically illustrates the outer shell 201 of the rotor blade 200, on which the spar cap assembly 100 may be laid-up, or into which the spar cap assembly 100 may be included. Again, an intermediate layer may optionally be added at this stage.

As can be seen, the electrically activated regions may (almost) fully overlap in the respective longitudinal contact range 10. The sheets 11, 12 for contacting the two layers 51, 52 associated with the contact range 10 may further have a similar size and may be placed at the similar or same longitudinal position. However, each sheet may also be sectioned, may be placed at an angle, or the like, as long as it provides the dedicated electrical connection to the layers associated with the respective longitudinal contact range.

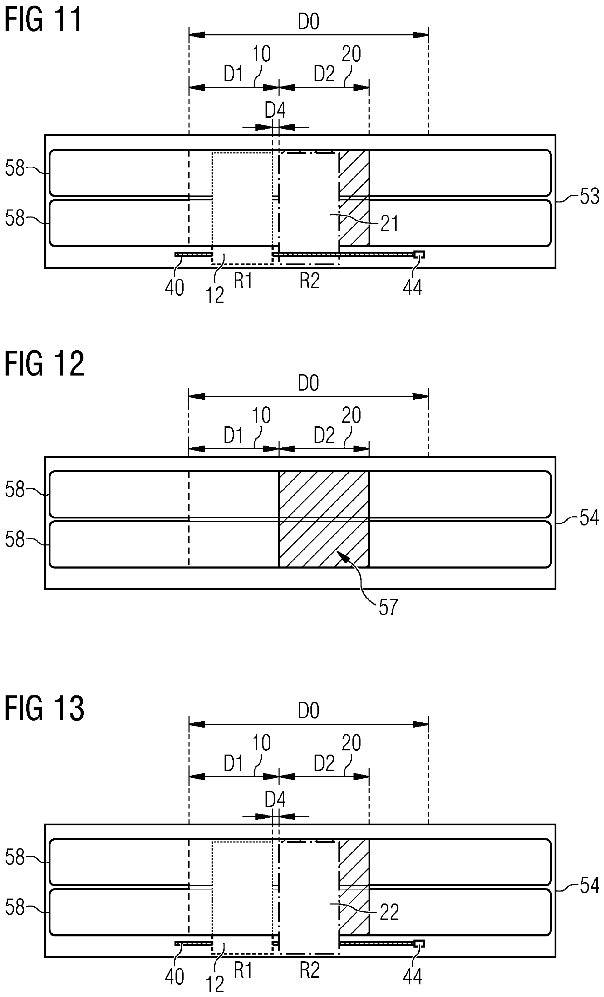

In Fig. 10, the next layer 53 of carbon planks 58 is placed on top of the stack and is again electrically activated in region 57. Activation now occurs in the second longitudinal contact range 20 that is arranged directly next to the first range 10. The preceding steps are now repeated. As illustrated in Fig. 11, a sheet 21 is placed on the layer 53 in contact with the electrically activated region 57 and further rests against the lightning conductor 40 (from the lower side 41). Sheet 21 does in thickness direction not overlap with sheets 11, 12, so that sheet 21 also establishes a direct electrical connection to the lightning conductor 40. In longitudinal direction 110, distance D4 is maintained between the sheets of the neighboring contact ranges 10, 11. Contact between the sheets may thus be interrupted and the occurring of structural disturbance due to overlapping of plural sheets may be avoided.

As shown in Fig. 12, the lay-up procedure then continues with placing the next layer 54 of carbon fiber planks 58 on the stack and again providing an electrically activated region 57 in the second longitudinal contact range 20. A second sheet 22 is placed on the layer 54 in the second longitudinal contact range 20 on the stack, as shown in Fig. 13. The second layer 22 overlaps with the first layer 21 in the same longitudinal contact range 20, but does not overlap with the sheets of any of the other longitudinal contact ranges (e.g. range 10). Again, a spacing distance D4 is maintained in longitudinal direction towards the sheets of the neighboring range 10.

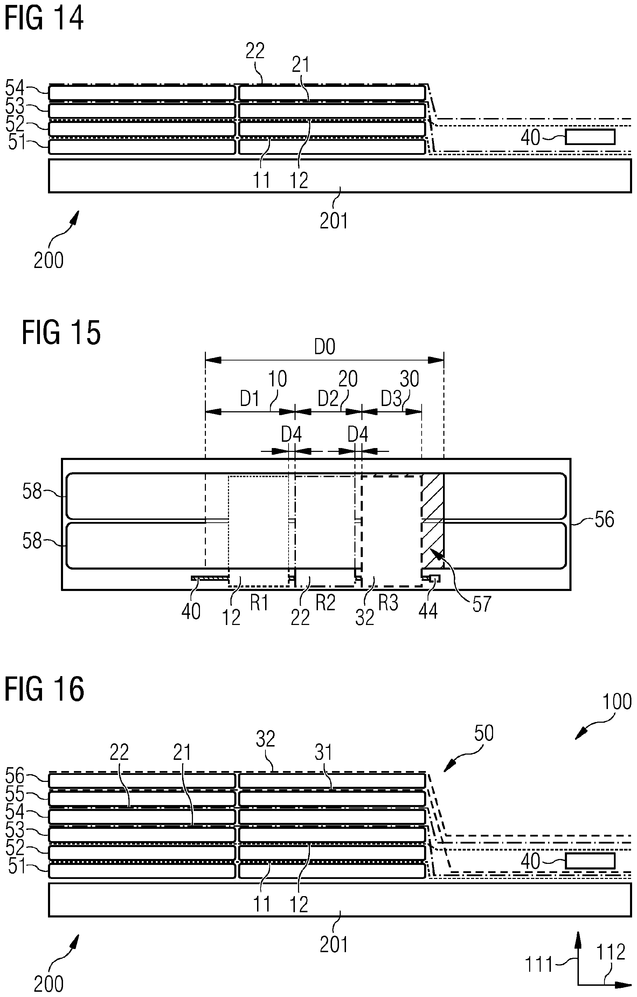

As illustrated in Fig. 14, the sheets 21, 22 of the second longitudinal contact range 20 again contact the lightning conductor 40 from different opposite sides, so that each of the sheets 11, 12 and 21, 22 is in direct electrical contact with the lightning conductor 40. The distance between the sheets and the lightning conductor 40 is shown in Figs. 14 and 16 only for the purpose of illustration but is in fact not present.

The method may continue in a corresponding way until the last layer of the stack is reached. Fig. 15 illustrates a sixth layer 56 of the stack again comprising an electrically activated region 57 in the third longitudinal contact range 30. A second sheet 32 of this range 30 is placed on top of the layer 56 and thus in direct electrical contact with both carbon fiber planks 58. The second sheet 32 may again overlap with a first sheet in the same contact range 30, and may not overlap with any of the sheets in the other longitudinal contact ranges 10, 20. It is noted that although Fig. 15 shows an equal spacing D4 between sheets and an equal width of the sheets of different contact ranges, these measures may certainly also differ between different contact ranges and/or between different sheets within a contact range.

As illustrated in the sectional view of Fig. 16 taken perpendicular to the longitudinal direction, the sheets 31, 32 of the third range 30 again contact the lightning conductor 40 from two opposite sides, so that each sheet is in direct electrical contact with the lightning conductor 40.

As mentioned above, if there is an odd number of layers, a longitudinal contact range may only comprise a single sheet. Optionally, intermediate layers may be placed between each two layers of planks 58 of the stack 50. Additional planks 58 may be placed in lateral direction, and the stack may comprise fewer or more layers.

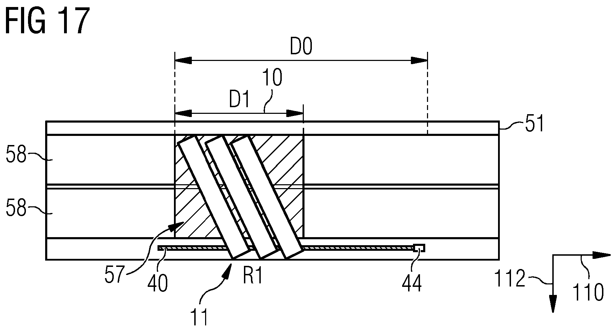

Fig. 17 illustrates an alternative implementation in which a sheet of a particular longitudinal contact range is provided as sheet sections and is further arranged at an angle to the longitudinal position. It is however referred that the sheet is a single piece of material, e.g. fabric, foil, or mesh.

The potential equalization assembly may thus extend over a longitudinal distance D0, within which it electrically connects each layer of the carbon fiber spar cap to the lightning conductor. Improved current carrying capacity may thereby be achieved.

While specific embodiments are disclosed herein, various changes and modifications can be made without departing from the scope of the invention. The present embodiments are to be considered in all respects as illustrative and non-restrictive, and all changes coming within the meaning and equivalency range of the appended claims are intended to be embraced therein.

## Claims

1. A spar cap assembly for a rotor blade of a wind turbine, wherein the spar cap assembly (100) comprises:
- a stack (50) of layers (51, 52, ...) of carbon fiber composite material, wherein the layers are stacked in a thickness direction (111) and wherein the stack (50) extends in a longitudinal direction (110);
- a lightning conductor (40) of a lightning protection system extending along the stack of layers;
- at least one potential equalization assembly (120) configured to electrically connect the stack (50) of layers of carbon fiber composite material to the lightning conductor (40) to provide an equipotential bonding (121) at an equipotential bonding position (122) in the longitudinal direction,
wherein the at least one potential equalization assembly (120) comprises two or more longitudinal contact ranges (10, 20, ...) arranged in longitudinal direction (110) next to each other, wherein each longitudinal contact range (10, 20, ...) is associated with at least one layer (51, 52, ...) of the stack (50) that is different from the layers of the stack associated with the one or more other longitudinal contact ranges,
wherein each longitudinal contact range (10, 20, ...) comprises at least a first sheet (11, 21, ...) of conductive material that is arranged on and in direct electrical contact with a layer (51, 52, ... ) of the stack (50) associated with the longitudinal contact range (10, 20, ...),
wherein the first sheet (11, 21, ...) further rests against the lightning conductor (40) and is in direct electrical contact with the lightning conductor (40), and
wherein the first sheet (11, 21, ...) does not overlap in thickness direction (111) with each sheet provided in the other longitudinal contact range or ranges.

2. The spar cap assembly according to claim 1, wherein the first sheet (11) of a longitudinal contact range (10) is spaced apart in longitudinal direction from the first sheet (21) of each neighboring longitudinal contact range (20) by a spacing distance (D4), wherein the spacing distance (D4) is preferably smaller than a width in longitudinal direction of the first sheet (11) of the longitudinal contact range (10), preferably smaller than 50%, 25%, 10% or 5% of the width.

3. The spar cap assembly according to claim 1 or 2, wherein the at least one potential equalization assembly (120) comprises three, four or more longitudinal contact ranges (10, 20, 30, ...).

4. The spar cap assembly according to any of the preceding claims, wherein the at least one potential equalization assembly (120) comprises, in at least one of the longitudinal contact ranges (10, 20, ...), a second sheet (12, 22, ...) of conductive material, wherein the second sheet of conductive material is arranged on and in direct electrical contact with a further different layer of the stack (50) that is associated with the respective longitudinal contact range (10, 20, ...), wherein preferably, the second sheet (12, 22, ...) is arranged at a position in longitudinal direction such that the second sheet (12, 22, ...) and the first sheet (11, 21, ...) of the same longitudinal contact range at least partially overlap in thickness direction, wherein the overlap is preferably more than 70% of the area of the first sheet projected in thickness direction.

5. The spar cap assembly according to claim 4, wherein each longitudinal contact range or each longitudinal contact range except one longitudinal contact range comprises a respective second sheet (12, 22, ...) of conductive material.

6. The spar cap assembly according to claim 4 or 5, wherein the second sheet (12, 22, ...) of the longitudinal contact range (10, 20, ...) does not overlap in thickness direction with any sheet of the other longitudinal contact range or ranges of the potential equalization assembly (120).

7. The spar cap assembly according to any of claims 4-6, wherein the second sheet (12, 22, ...) of each longitudinal contact range (10, 20, ...) rests against the lightning conductor (40) and is in direct electrical contact with the lightning conductor (40).

8. The spar cap assembly according to claim 7, wherein for the or each longitudinal contact range having a second sheet (12, 22, ...), the first sheet (11, 21, ...) rests against the lightning conductor (40) from a first side (41) and the second sheet (12, 22, ...) rest against the lightning conductor (40) from a second side (42) different from the first side (41) so that the first sheet and the second sheet are each in direct electrical contact with the lightning conductor (40).

9. The spar cap assembly according to any of the preceding claims, wherein in the longitudinal contact range (10, 20, ...), the at least one layer (51, 52, ...) associated with the longitudinal contact range comprises an electrically activated region (57), wherein the sheet (11, 21; 12, 22) is in direct electrical contact with the electrically activated region (57) of the layer (51, 52, ...).

10. The spar cap assembly according to any of the preceding claims, wherein the stack (50) has a mid-span region (102) in longitudinal direction (110), wherein the at least one potential equalization assembly comprises at least one, preferably two or more, potential equalization assemblies (120) in the mid-span region (102), each being located at a different equipotential bonding position (122).

11. The spar cap assembly according to claim 10, wherein the spar cap assembly (100) comprises in the mid-span region (102) at least one electrical connection (44) towards an air termination, in particular towards a lightning receptor (45).

12. The spar cap assembly according to any of the preceding claims, wherein a layer (51, 52, ...) of the stack (50) associated with a longitudinal contact region (10, 20, ...) comprises at least two pultruded elements (58) extending in longitudinal direction and being arranged next to each other in a lateral direction (112) of the stack, wherein the sheet (11, 12, 21, 22, ...) of the longitudinal contact range that is in direct electrical contact with the layer (51, 52, ...) extends over the at least two pultruded elements (58) and is in direct electrical contact with each of the at least two pultruded elements (58).

13. A rotor blade of a wind turbine, wherein the rotor blade (200) comprises at least one spar cap assembly (100) according to any of the preceding claims.

14. A method of manufacturing a spar cap assembly of a rotor blade of a wind turbine, wherein the method comprises:
- arranging layers (51, 52, ...) of carbon fiber composite material in a stack (50), wherein the layers are stacked in a thickness direction (111) and wherein the stack extends in a longitudinal direction (110);
- providing a lightning conductor (40) of a lightning protection system that extends along the stack (50); and
- forming at least one potential equalization assembly (120) to electrically connect the stack (50) of layers of carbon fiber composite material to the lightning conductor (40) to provide an equipotential bonding (121) at an equipotential bonding position (122) in the longitudinal direction,
wherein forming the at least one potential equalization assembly (120) comprises:
- when forming the stack, arranging in a first longitudinal contact range (10) a sheet (11) of conductive material in direct physical contact with a layer (51) of the stack that is associated with the first longitudinal contact range (10), wherein the sheet (11) is further arranged to directly rest against the lightning conductor (40); and
- when forming the stack, arranging in a second longitudinal contact range (20) a sheet (21) of conductive material in direct physical contact with a layer (53) of the stack that is associated with the second longitudinal contact range (20), the layer being different from the layer associated with the first longitudinal contact range, wherein the sheet (21) is further arranged to directly rest against the lightning conductor (40);
wherein the first longitudinal contact range (10) and the second longitudinal contact range (20) are arranged in longitudinal direction next to each other, and wherein the sheet (21) in the second longitudinal contact range (20) is arranged so as to not overlap in thickness direction the sheet (11) arranged in the first longitudinal contact range (10).

15. The method according to claim 14, wherein the method further comprises:
- when forming the stack (50), arranging in the first longitudinal contact range (10) a second sheet (12) of conductive material in direct physical contact with a different layer (52) of the stack that is associated with the first longitudinal contact range (10), wherein the second sheet (12) is further arranged to directly rest against the lightning conductor (40) on a side (42) of the lightning conductor (40) different from the side (41) on which the sheet (11) of the first longitudinal contact range (10) rests.
